(19) Europäisches Patentamt
European Patent Office
Office européen des brevets

(11) EP 0 963 947 A1

(12) EUROPEAN PATENT APPLICATION
published in accordance with Art. 158(3) EPC

(43) Date of publication:
15.12.1999 Bulletin 1999/50

(51) Int. Cl.⁶: **C01B 33/12**, C01F 7/02,
C09D 11/02, B41M 5/00,
B41M 5/40, D21H 19/38,
D21H 17/67

(21) Application number: 97912525.9

(22) Date of filing: 20.11.1997

(86) International application number:
PCT/JP97/04235

(87) International publication number:
WO 98/22388 (28.05.1998 Gazette 1998/21)

(84) Designated Contracting States:
DE FR GB

(30) Priority: 21.11.1996 JP 32486696
09.12.1996 JP 34238796

(71) Applicant:
OJI-YUKA SYNTHETIC PAPER CO., LTD.
Tokyo 101 (JP)

(72) Inventors:
• SHIBUYA, Nobuhiro,
Oji-Yuka Synthetic Paper Co.,
Kashima-gun, Ibaraki 314-02 (JP)
• YASUDA, Ayumu
Hirakata-shi, Osaka 573 (JP)
• KANBARA, Hajime
Ibaraki-shi, Osaka 567 (JP)

(74) Representative: HOFFMANN - EITLE
Patent- und Rechtsanwälte
Arabellastrasse 4
81925 München (DE)

(54) **MINUTE COMPOSITE INORGANIC POWDER AND USE THEREOF**

(57) A composite inorganic fine powder constituted of particles and shells covering the particle is provided in which the particle as a core has hydroxyl groups, such as magnesium hydroxide, porous silica, and hydrotalcite, and the shell is formed from an aluminum compound selected from aluminum oxide and aluminum hydroxide. This composite inorganic fine powder is capable of fixing ink well, and is useful as a filler for recording mediums and synthetic paper sheets to obtain sharp images and prints.

FIG. 1

1a
2a
1 (CORE)
2 (SHELL)

EP 0 963 947 A1

## Description

TECHNICAL FIELD

The present invention relates to a novel composite inorganic fine powdery particles in which the particle is constituted of a core having hydroxyl groups and a shell composed of an aluminum type compound covering the entire surface of the core.

This composite inorganic fine powder is useful as a filler of an ink-receiving layer provided on a support of an aqueous ink-jet recording paper sheet, or as a material for forming synthetic paper, hollow resin containers, housing-forming resin materials, and a filler of pigment paper (wood-free paper).

TECHNICAL BACKGROUND

An ink-jet recording system conducts recording by using an aqueous ink containing a dye dissolved in water. The ink-jet recording system has advantages of high printing speed, low noise generation, ease of multiple color printing, less limitation in pattern printing, and needlessness of development and fixing treatment like silver salt photograph. Therefore, the ink-jet recording is coming to be widely employed in various application fields such as hard copy apparatus for color graphic information involving Chinese characters.

Further, the images formed by a multicolor ink-jet system are comparable with those formed by usual multicolor printing (e.g., offset printing), and when the number of reproduced copies is not large, for example nor more than 500 copies, the printing cost is lower in comparison with that of a usual engraving system. Therefore, use of the ink-jet recording system is tried in application fields such as multicolor printing and color photography, other than simple recording.

For the purpose of using plain paper (PPC paper), pigment-coated paper, or synthetic paper as the recording medium, efforts have been made to improve the ink-jet recording apparatus and the ink composition. However, with the improvement of the ink-jet recording apparatus in printing speed, print fineness, and full color quality, and with the spreading of the application fields, the recording medium is required to have still more improved properties.

In an ink-jet recording paper sheet having an ink-receiving layer provided on the surface of a support, the ink-receiving layer is formed by drying a coating material prepared by blending a water-soluble or water-dispersible resin binder and an inorganic fine powdery material (JP-A-55-51683, JP-A-62-174182, JP-A-3-284978, and JP-A-7-89216). (The term "JP-A" as used herein means an "unexamined published Japanese patent application") The inorganic fine powdery material includes colloidal silica, alumina oxide, calcium carbonate, calcium silicate, kaolin, and titanium oxide.

As the particles for ink adsorption, porous particles have been used which have a larger internal porosity, such as porous powdery silica and alumina sol for a higher uptake rate of an ink-jet recording liquid and for a higher drying rate of the recording medium.

On the other hand, for higher color developability of the ink-jet recording liquid, the ink containing a dye or pigment is preferably to be fixed entirely at the particle surface. However, the ink is usually fixed also in the interior of the porous particles to cause a problem in the color developability.

The inventors of the present invention tried to decrease the ink fixation in the interior of the porous particle by treating the particle surface with a higher fatty acid or a fatty acid bisamide, but found adversely that the treatment lowers the drying speed.

DISCLOSURE OF THE INVENTION

The present invention intends to provide a composite inorganic fine powder which has high abilities in ink adsorption and ink fixation. The present invention intends also to provide a recording medium which has an ink-receiving layer containing the above composite inorganic fine powder formed on the surface of a support. The present invention intends further to provide a synthetic paper sheet which does not cause color sink.

A first embodiment of the present invention is a composite inorganic fine powder constituted of particles and shells covering the particles, the particles as a core having hydroxyl groups, and the shell being formed from an aluminum compound selected from aluminum oxide and aluminum hydroxide.

A second embodiment of the present invention is a process for producing the composite inorganic fine powdery material of the first embodiment, the process comprising bringing hydroxyl group-containing particles having water adsorbed thereto into contact with an aluminum alkoxide represented by General Formula (1) dissolved in a hydrophilic solvent to form a film of the aluminum hydroxide or aluminum oxide on the surface of the hydroxyl group-containing particles, and then volatilizing the hydrophilic solvent;

$$R^1_{(3-n)}Al(OR^2)_n \qquad (1)$$

(in the formula $R^1$ and $R^2$ are independently an alkyl group of 1-6 carbons, and n is 2 or 3.)

A third embodiment of the present invention is a recording medium having, on the surface of a support, a resinous coat layer containing the above composite inorganic fine powdery material at a content of 40-92 wt%, and a resin binder at a content of 60-8 wt%.

A fourth embodiment of the present invention is a synthetic paper sheet produced by stretching a resin film containing the above composite inorganic fine powdery material at a content of 8-65 wt% and a thermoplastic resin at a content of 92-35 wt% at a temperature lower than the melting point of the thermoplastic resin.

Since the composite inorganic fine powder of the present invention has hydroxyl group-containing particles as the cores which are covered with a shell of an aluminum compound over the entire surface, the dye or pigment in an ink-jet recording liquid or an offset ink will be fixed only by the shells to develop sharp color.

The shell, which is an aluminum compound in a porous state, provides pores for penetration of the ink-jet recording liquid or the offset ink, whereby the penetration of the ink-jet recording ink or the offset ink into the particles is accelerated and the drying is promoted.

Further, in the embodiment of the synthetic paper sheet, fine voids are formed inside the stretched film, by the stretching treatment, by utilizing the composite inorganic fine powder particles as the cores to increase the opacity of the synthetic paper, lowering the density to decrease the unit weight, and causing fine cracks on the stretched film surface. The cracks and the presence of the composite inorganic fine powder improves the transferability, adhesiveness, and drying properties of the recording liquids and the inks used for general printing, printing with a uv-curing ink (offset, gravure, flexography, and seal printing), fusion type or sublimation type heat-sensitive printing, hot-melt type ink-jet printing, aqueous or oily ink-jet printing, electrophotograph type toner printing, and the like printing.

BRIEF DESCRIPTION OF THE DRAWINGS

Fig. 1 is a sectional view of a model structure of a composite inorganic fine powder particle of the core-shell structure of the present invention.
Fig. 2(a) is an SEM photograph of the surface of composite inorganic fine powder of porous silica having been surface-treated according to the present invention. Fig. 2(b) is an EDX line analysis chart thereof.
Fig. 3(a) is an SEM photograph of the surface of the porous silica particle not surface-treated. Fig. 3(b) is an EDX line analysis chart thereof.

BEST MODE FOR PRACTICING THE INVENTION

The composite inorganic fine powder of the present invention is explained below.

The composite inorganic fine powder of the present invention is constituted of particles and shells covering the particle, the particle as a core having hydroxyl groups, and the shell being formed from an aluminum compound selected from aluminum oxide and aluminum hydroxide. Usually, the adsorption surface area of the composite inorganic fine powder is larger than that of the particles having hydroxyl groups before the covering shell formation.

Such composite inorganic fine powder particles can be produced by the process comprising bringing hydroxyl group-containing particles having water adsorbed thereto into contact with an aluminum alkoxide represented by aforementioned General Formula (1) dissolved in a hydrophilic solvent to form a film of the aluminum hydroxide or aluminum oxide on the surface of the hydroxyl group-containing particles, volatilizing the hydrophilic solvent, and if necessary, heating the resulting particles at a temperature of 80-600°C.

The hydroxyl group-containing particles used in the present invention are fine particles having a hydroxyl group in the molecular structure, and having an average particle diameter ranging from 0.1 to 5 $\mu$m, preferably from 0.8 to 3 $\mu$m, and a BET adsorption area ranging from 0.5 to 600 $m^2/g$. The specific examples of the hydroxyl group-containing particles include inorganic fine particulate materials such as magnesium hydroxide, aluminum hydroxide, pulverized dorsonite [$NaAl(OH)_2CO_3$], montmorillonite [$Al_4(Mg)[Si_8(Al)O_{20}](OH)_4 \cdot xH_2O$], basic magnesium-aluminum hydroxy carbonate hydrate [$Mg_6Al_2(OH)_{16}CO_3 \cdot 4H_2O$], natural or synthetic hydrotalcite [$Mg_{4.5}Al_2(OH)_{13}CO_3 \cdot 3.5H_2O$], calcite ($3CaO \cdot Al_2O_3 \cdot 6H_2O$), coprecipitated aluminum-magnesium hydroxide, coprecipitated aluminum hydroxide-sodium carbonate, anhydrous calcium hydrogenphosphate, porous silica, and the like.

Further, organic polymer particles having hydroxyl groups such as fine particles of cross-linked copolymers of methyl methacrylate and 2-hydroxyethyl methacrylate; and fine particles of cross-linked copolymers of styrene, ethylene glycol diacrylate, and 2-hydroxyethyl methacrylate are also useful therefor.

In the process for producing the composite inorganic fine particles, when the used hydrophilic solvent contains water at a content ranging from 0.0001 to 5 wt%, water need not be adsorbed preliminarily by the hydroxyl group-containing particles. The hydroxyl group-containing particles, when dispersed in the hydrophilic solvent, will adsorb water as a drying agent from the hydrophilic solvent. The aluminum alkoxide is hydrolyzed and polymerized by water, and reacts with the hydroxyl groups on the particle surface to form a layer of porous aluminum oxide or aluminum hydroxide on the particles (nucleuses). In this layer formation, particles of aluminum oxide or aluminum hydroxide will not be formed separately from the hydroxyl group-containing particles.

In an example in which porous silica is used as the hydroxyl group-containing particles and aluminum triisopropoxide is used as the aluminum alkoxide (see Example 1), the reaction proceeds as shown by the formulas below.

$$Al[OCH(CH_3)_2]_3 + 3H_2O \rightarrow Al(OH)_3 + 3(CH_3)_2CHOH \qquad [1]$$

$$Al(OH)_3 + Al(OH)_3 \rightarrow (OH)_2Al\text{-}O\text{-}Al(OH)_2 + H_2O \qquad [2]$$

$$Al(OH)_3 + Si(OH)_4 \rightarrow (OH)_2Al\text{-}O\text{-}Si(OH)_2 + H_2O \qquad [3]$$

In Formula [3], $Si(OH)_4$ represents Si-OH on the surface of porous silica particles having hydroxyl groups, and may be hydroxyl groups on the particle surface or on the internal surface.

In Formula [1], $H_2O$ represents the water contained in hydroxyl group-containing particles, or the one absorbed by the particles. Therefore, in the present invention, the hydrolysis of the aluminum alkoxide proceeds on the surface of hydroxyl group-containing particles, and the resulting double-layered particles have a structure constituted of a core of a hydroxyl group-containing particle and a shell of an aluminum hydroxide and/or aluminum oxide film covering the entire surface of the core.

The hydrophilic solvent includes aliphatic alcohols of 1 to 8 carbons such as methyl alcohol, ethyl alcohol, n-propyl alcohol, isopropyl alcohol, isobutyl alcohol, and tert-butyl alcohol; ethers such as dimethyl ether, diethyl ether, dipropyl ether, diisopropyl ether, dibutyl ether, dioxane, trioxane, furan, 2-methylfuran, tetrahydrofuran, diethylene glycol dimethyl ether, and diethylene glycol diethyl ether; ketones such as acetone, methyl ethyl ketone, 2-pentanone, 3-pentanone, 2-hexanone, and methyl isobutyl ketone; esters such as methyl acetate, ethyl acetate, and propyl acetate; formamides such as formamide, methyl -formamide, and dimethyl-formamide; and mixtures of two or more of the above solvents.

Of these solvents, preferred are tetrahydrofuran, butanol, isopropyl alcohol, ethyl alcohol, dimethylformamide, dimethyl ether, diethyl ether, methyl ethyl ether, and the like.

The preferred aluminum alkoxide includes aluminum triisopropoxide, aluminum tributoxide, aluminum triethoxide, aluminum tri-sec-butoxide, mono-sec-butoxyaluminum diisopropoxide, di-sec-butoxyaluminum monoisopropoxide, mono-sec-butoxyaluminum di-n-butoxide, di-sec-butoxyaluminum mono-n-butoxide, aluminum tri-n-propoxide, isopropoxyaluminum di-n-propoxide, diisopropoxyaluminum n-propoxide, diisopropoxyaluminum monoethoxide, monoisopropoxyaluminum diethoxide, di-sec-butoxyaluminum monomethoxide, diisopropoxyaluminum monomethoxide, diisopropoxyaluminum monohexyloxide, mono-n-propoxyaluminum diethoxide, di-n-propoxyaluminum monoethoxide, mono-sec-butoxialuminum diethoxide, di-sec-butoxialuminum monoethoxide, aluminum tripentyl oxide, aluminum ethyl diisopropoxide, aluminum ethyl diethoxide, aluminum ethyl dibutoxide, aluminum isopropyl diethoxide, aluminum methyl diethoxide, and the like. Of these, particularly preferred are aluminum triisopropoxide, aluminum tri-sec-butoxide, aluminum triethoxide, and mono-sec-butoxyaluminum diisopropoxide.

For obtaining the composite inorganic fine powder of the core-shell structure of the present invention, the particles to become hydroxyl group-containing cores should have water for catalysis adsorbed on the surface of the particles prior to the contact with the aluminum alkoxide for the reaction.

The water is allowed to be absorbed by the hydroxyl group-containing particles by immersing the particles as the core into water and taking them out, or by dispersing or immersing the particles in a hydrophilic solvent by utilizing the water adsorbing property of the particles.

The amount of water to be adsorbed by 100 parts by weight of the hydroxyl group-containing particles ranges from 0.01 to 10 parts by weight, preferably from 0.5 to 5 parts by weight.

For uniform reaction of the hydroxyl group-containing particles having adsorbed water with the aluminum alkoxide, the aluminum alkoxide is dissolved in the hydrophilic solvent and the particles are brought into contact with this solution. The aluminum alkoxide is used in an amount ranging preferably from 1 to 15 parts by weight, more preferably from 5 to 12 parts by weight per 100 parts by weight of the hydroxyl group-containing particles.

The hydrophilic solvent is used in an amount ranging from 80 to 2,000 parts by weight, preferably from 200 to 1,100 parts by weight per 100 parts by weight of the hydroxyl group-containing particles.

The temperature of the reaction of the hydroxyl group-containing particles having the adsorbed water with the aluminum alkoxide ranges usually from -30°C to +95°C, preferably from 0°C to 90°C. After the reaction, the hydrophilic solvent is removed by vacuum drying or volatilization, and may be heated, if necessary, to a temperature ranging from 80°C to 600°C to complete the drying. The aluminum hydroxide can be converted to aluminum oxide under the heat-drying conditions.

The adsorption surface area of the composite inorganic fine powder of the core-shell structure thus obtained of the present invention is larger than that of the core, ranging usually from 1 to 1,000 $m^2/g$, preferably from 2 to 800 $m^2/g$ according to a BET method. The particle diameter thereof ranges usually from 0.5 to 7 $\mu$m, preferably from 1 to 5 $\mu$m. When porous silica is used as the hydroxyl group-containing particulate material, the BET adsorption surface area is preferably not less than 350 $m^2/g$.

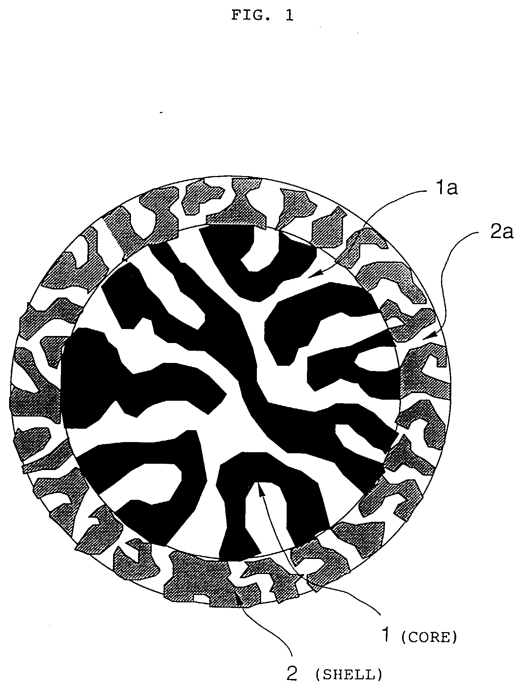

The composite inorganic fine powder has a structure, as shown schematically in Fig. 1, such that the entire surface of the hydroxyl group-containing particle as the core is covered with a porous film of aluminum hydroxide or aluminum oxide.

In Fig. 1, the numeral 1 indicates a core of the particle having hydroxyl groups; 1a, a pore which maybe present or absent; 2, a shell composed of aluminum hydroxide and/or aluminum oxide; 2a, a pore present in the shell.

If the hydroxyl group-containing particles do not have adsorbed water prior to the contact with aluminum alkoxide, the film will not cover the entire of the hydroxyl group-containing particles (see comparative Examples 1 and 2). This prevents sufficient adsorption of ink on the composite inorganic fine powder surface to cause outflow of the ink around the composite inorganic fine powder, resulting in feathering of the print and lack of sharpness of the ink.

The recording medium of the third embodiment of the present invention is a recording paper sheet constituted of a support (I) such as a pulp-made paper sheet, a thermoplastic resin film containing an inorganic fine powder, a polyvinyl chloride film, and a biaxially oriented polyethylene terephthalate film, and a coat layer (II) (aqueous ink-receiving layer) provided thereon containing the aforementioned composite inorganic fine powder at a content ranging from 40 to 92 wt%, preferably from 60 to 90 wt% and a resin binder at a content ranging from 60% to 8 wt%, preferably from 40% to 10 wt%. This recording medium is useful as aqueous ink-jet recording paper sheets, and hot-melt type ink-jet recording paper sheets, and is satisfactory in ink transfer, and ink drying properties to give sharp printing and recording of an image.

The composite inorganic fine powder of the core-shell structure of the present invention may be used singly, or 60 wt% or less thereof may be replaced by another powdery material such as calcium carbonate, clay, titanium oxide, zinc oxide, talc, and the like.

The resin binder includes styrene-maleic anhydride copolymers, styrene-alkyl acrylate copolymers, polyvinyl alcohols, ethylene-vinyl alcohol copolymers containing a silanol group, polyvinylpyrrolidones, ethylene-vinyl acetate copolymers, methylethylcellulose, sodium polyacrylates, starch, polyethylenepolyamines, polyesters, polyacrylamides, vinylpyrrolidone-vinyl acetate copolymers, cation-modified polyurethane resins, tertiary nitrogen-containing acrylic resins (JP-A-62-148292), and the like.

This coating layer may contain an ink-setting agent, a uv-absorbing agent, a surfactant, or the like, if necessary.

The ink-setting agent includes tertiary ammonium salts of polyethyleneimines, acrylic copolymers containing a quaternary ammonium group as a copolymer component, epichlorohydrin adducts of polyaminepolyamides.

The coating layer is formed on the support by applying a coating agent containing an inorganic fine powder and a resin binder onto the surface of the support in an amount of the solid ranging from 2 to 50 $g/m^3$, preferably from 5 to 30 $g/m^3$, and drying it.

The thickness of the support is usually ranges from 30 to 250 $\mu$m, preferably from 60 to 150 $\mu$m.

The surface of the dried coating layer may be made smooth by supercalender treatment.

The synthetic paper of the fourth embodiment of the present invention is produced by stretching a resin film composed basically of the above composite inorganic fine powdery material of the core-shell structure of the present invention at a content ranging from 8 to 65 wt%, preferably from 10 to 55 wt%, and a thermoplastic resin at a content ranging from 92 to 35 wt%, preferably from 90 to 45 wt%, at a stretching temperature lower than the melting point of the thermoplastic resin, whereby the synthetic paper sheet is produced as a stretched film containing fine voids in the interior.

The resulting microporous synthetic paper sheet has an opacity (JIS P-8138) of not lower than 85%, preferably not lower than 90%, a void ratio according to Equation (1) below ranging from 5% to 60%, preferably from 15% to 45%, a thickness ranging from 30 to 300 $\mu$m, preferably from 50 to 150 $\mu$m, and a density ranging from 0.60 to 1.12 $g/cm^3$.

Equation 1

$$\text{Void ratio (\%)} = [(\rho 0 - \rho)/\rho 0] \times 100$$

where $\rho 0$ is the density of the resin film before the stretching, and $\rho$ is the density of the resin film after the stretching.

The inorganic fine powder may be the composite inorganic fine powder itself having the core-shell structure of the present invention or may be a combination with another filler. The filler to be combined includes calcium carbonate, sintered clay, silica, diatomacious earth, talc, titanium oxide, barium sulfate, and the like having a particle diameter ranging from 0.03 to 5 μm.

The thermoplastic resin is preferably at least the one selected from the group of polypropylene, high-density polyethylene, polyethylene terephthalate, and polycarbonate.

The synthetic paper sheet may be of a single layer structure or of a multiple layer structure having another layer laminated thereon. The microporous synthetic paper sheet includes those of (1) and (2) described below. In the synthetic paper sheet, the inorganic fine powder in the surface layer of the synthetic paper sheet contains the composite inorganic fine powder having the core-shell structure of the present invention, and is different from the synthetic paper sheet of the prior art cited later as the references in that the composite inorganic fine powder of the core-shell structure of the present invention is used as the inorganic fine powder.

(1) A biaxially stretched film of a thermoplastic resin having micropores and containing inorganic tine powder at a content ranging from 8 to 65 wt% (JP-B-54-31032. U.S. Patent 3,775,521, U.S. Patent 4,191,719, U.S. Patent 4,377,616, and so forth). (The term "JP-B" as used herein means an "examined Japanese patent publication")
(2) A synthetic paper sheet having a biaxially stretched thermoplastic film as the base layer, and a uniaxially stretched film of a thermoplastic resin as the paper layer containing art inorganic fine powder at a content of 8-65 wt% (JP-B-46-40794, JP-A-57-149363, JP-A-57-181829, etc.).

This synthetic paper sheet may be of a two-layer structure, a three-layer structure constituted of the base layer and the aforementioned paper layers on both faces thereof (JP-B-46-40794, and U.S. Patent 4,318,950), a 3-7 layer structure having another resin film layer between the paper layer and the base layer (JP-B-50-29738, JP-A-57-149363, JP-A-56-126155, JP-A-181829, and U.S. Patent 4,472,227), a three or more layer structure having on the back face a heat-sealing layer composed of a material having a melting point lower than that of the base layer resin, such as a propylene-ethylene copolymer, a metal salt (Na, Li, Zn, or K) of an ethylene-(meth)acrylic acid copolymer, and chlorinated polyethylene (JP-B-3-13973).

The three-layered synthetic paper sheet is produced, for example, by stretching a thermoplastic resin film containing an inorganic fine powder at a content of 0-30 wt%, preferably 8-25 wt% in one stretching direction at a temperature lower than the melting point of the resin, laminating a melted film of a thermoplastic resin containing an inorganic fine powder at a content of 8-65 wt% respectively on the both faces of the above film, and stretching this laminated film in a direction perpendicular to the aforementioned stretching direction. The resulting synthetic paper sheet has a lamination structure in which the paper layer is a film oriented uniaxially and has many fine voids, and the base layer is oriented biaxially.

The stretching ratio is preferably in the range from 4 to 10 in both of the vertical direction and the lateral direction. The stretching temperature is 140-162°C for polypropylene homopolymers (mp: 164-167°C) as the resin, 110-120°C for high-density polyethylene (mp: 121-124°C), and 104-115°C for polyethylene terephthalate (mp: 246-252°C). The stretching rate is 50-350 m/min.

This synthetic paper sheet is applicable to gravure printing, offset printing, and screen printing, and capable of producing sharp printing without color sink.

The present invention is explained below specifically by reference to Examples and Comparative Examples. Examples of Production of core-shell composite inorganic fine powder:

(Example 1)

Reaction Liquid 1:

To 100 g of porous silica (silicia 350, trade name, produced by Fuji Silicia Kagaku Kogyo K.K.) having an average particle diameter of 3.1μm, a BET adsorption surface area of 302.9 m$^2$/g, and a porosity of 70.2%, was added 1,000 g of tetrahydrofuran containing water at a water content of 0.5 wt%. The mixture was stirred in a closed vessel for 8 hours to allow the porous silica to adsorb the water.

Reaction Liquid 2:

10 Grams of aluminum triisopropoxide (powder) was dissolved in 10 g of tetrahydrofuran containing water at a water content of 100 ppm or less.

production of Composite Inorganic Fine Powder:

Reaction Liquid 1 and Reaction Liquid 2 were mixed together. The mixture was stirred in a closed vessel for 8 hours to cause reaction to form a composite inorganic fine powder. Reaction Liquid 2 was used for the mixing within 30 minutes after preparation. After the reaction, the solvent tetrahydrofuran was volatilized by an evaporator, and further the particulate product was vacuum dried at 150°C until a constant weight was reached. Thereby, the composite inorganic fine powder having particle diameter of 4.8 μm was obtained.

Table 1 shows the result of measurement of the BET adsorption surface area thereof. The measurement was conducted by means of ASAP200V2.03 (manufactured by shimadzu Corporation) with nitrogen as the adsorption gas. The adsorption surface area was calculated according to a conventional BET analysis. Specifically, the measured data were plotted in a graph with x in the abscissa and x/(V(1-x)) in the ordinate according to the BET equation below to obtain a straight line having a slope of (C-1)/(VmC) and an intercept of 1/(VmC), from which Vm and C can be calculated.

$$x/(V(1-x)) = 1/(VmC) + ((C-1)/(VmC))x$$

    x : Relative pressure (=P/P0)
    V : Amount of adsorption (at relative pressure x)
    Vm: Amount of monomolecular adsorption
    C : Constant >0

Here, Vm and C were derived in the range of x from 0.05 to 0.30 where good linearity could be obtained. From this Vm, the BET adsorption surface area was derived. In the later Examples and Comparative Examples also, the BET adsorption surface area was measured and calculated in the same manner.

The atomic composition of the composite inorganic fine powder of the surface-treated porous silica particles was analyzed by EDX by use of the apparatuses below.

    EDX : EMAX-5770-W, manufactured by Horiba Seisakusho
    SEM : S-2460N, manufactured by Hitachi, Ltd.

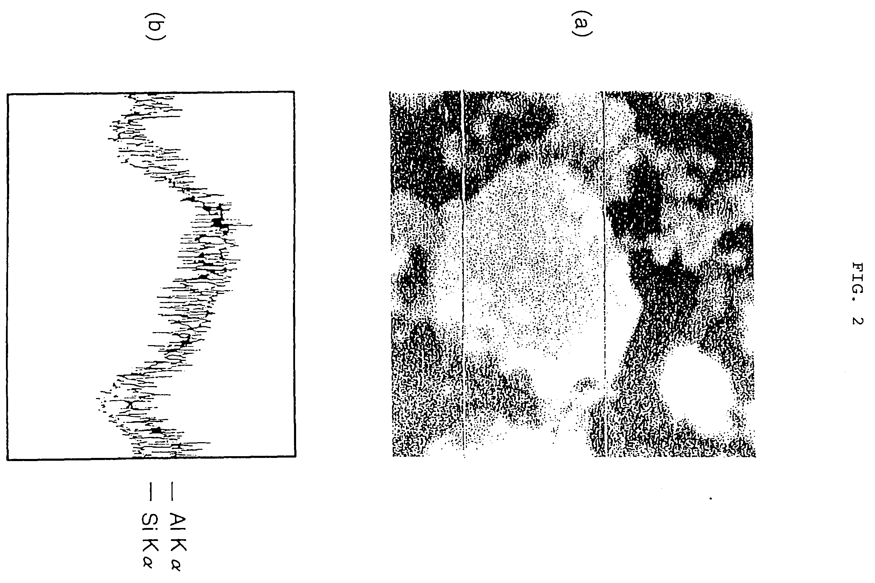

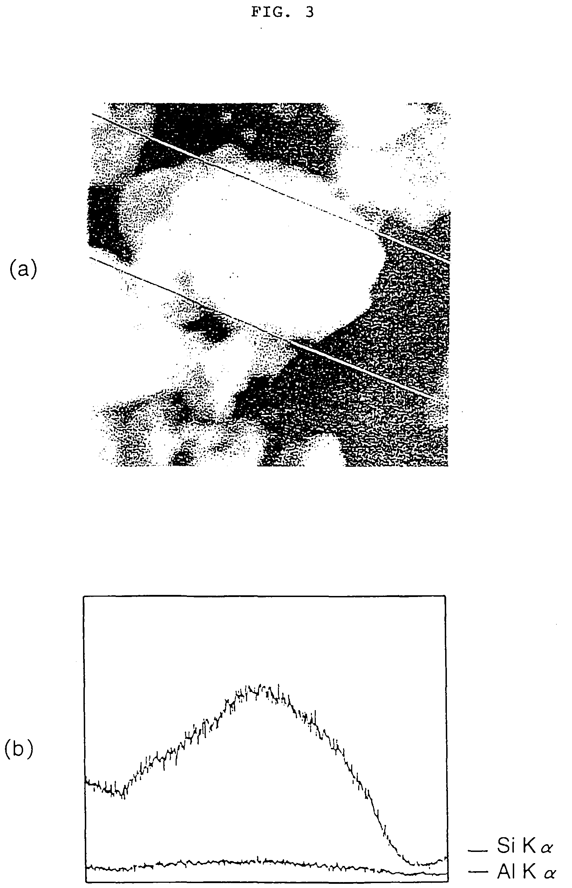

From the comparison of the results of the EDX line analysis of the surface-treated porous silica particles of Example 1 (Fig. 2 (a) and (b)) and the non-surface-treated porous silica particles (comparative Example 1; Fig. 3 (a) and (b)), the surface-treated porous silica particles of Example 1 was found to be a composite of porous silica particles, and aluminum oxide-aluminum hydroxide.

Thus, it was shown that the composite inorganic fine powder of this Example had a layer of aluminum oxide-aluminum hydroxide, and the adsorption surface area was larger than that of the untreated hydroxyl group-containing particles.

(Comparative Example 1)

The adsorption surface area of porous silica (Silicia 350, produced by Fuji Silicia Kagaku Kogyo K.K.) used in Comparative Example 1 was measured by the BET method. Table 1 shows the measurement result.

(Comparative Example 2)

Reaction Liquid 1:

1,000 Grams of n-hexane was added to 100 g of porous silica (Silicia 350, produced by Fuji Silicia Kagaku Kogyo K.K.). The mixture was stirred in a closed vessel for 8 hours.

Reaction Liquid 2:

10 Grams of n-hexane was added to 10 g of aluminum triisopropoxide (powder), and the mixture was stirred. Production of Composite Inorganic Fine Powder:

Reaction Liquid 1 and Reaction Liquid 2 were respectively not a solution, and were dispersed uniformly. Reaction Liquid 1 and Reaction Liquid 2 were mixed together and stirred to cause reaction, and the product was dried in the same manner as in Example 1 to obtain a powdery matter. Table 1 shows the measurement result of the BET adsorption surface area.

(Comparative Example 3)

Reaction Liquid 1:

To 100 g of porous silica (Silicia 350, produced by Fuji Silicia Kagaku Kogyo K.K.), was added 1,000 g of a 1:1 mixed solution of methanol and water. The mixture was stirred in a closed vessel for 8 hours.

Reaction Liquid 2:

10 Grams of a 1:1 mixed solution of methanol and water was added to 10 g of aluminum triisopropoxide (powder), and the mixture was stirred.

Production of Composite Inorganic Fine Powder:

Reaction Liquid 1 and Reaction Liquid 2 were respectively not a solution, and were dispersed uniformly. Reaction Liquid 1 and Reaction Liquid 2 were mixed and stirred to cause reaction, and the product was dried in the same manner as in Example 1 to obtain a powdery matter. Table 1 shows the measurement result of the BET adsorption surface area.
This treated powder had a structure such that some portions of the surface of the porous silica particles were coated with the aluminum compound but the surface was not entirely coated. In the powder, fine particles of aluminum oxide were observed to exist in addition to the porous silica particles.

(Example 2)

The reaction liquids shown below were prepared. Reaction Liquid 1 was stirred after the preparation in a closed vessel for more than 8 hours to allow the porous silica to adsorb the water from the solvent.

Reaction Liquid 1:

To 100 g of porous silica (Silicia 350, produced by Fuji Silicia Kagaku Kogyo K.K.), was added 1,000 g of N,N-dimethylformamide containing water at a water content of 0.2 wt%. The mixture was stirred in a closed vessel.

Reaction Liquid 2:

10 Grams of aluminum triisopropoxide (powder) was dissolved in 500 g of N,N-dimethylformamide of a water content of not higher than 100 ppm.

Production of Composite Inorganic Fine Powder:

Reaction Liquid 1 and Reaction Liquid 2 were mixed together, and the mixture was stirred in a closed vessel for 8 hours to cause reaction. Reaction Liquid 2 was used for the mixing within 30 minutes after preparation. After the reaction, the solvent was volatilized by an evaporator, and further the particulate product was vacuum-dried at 200°C until a constant weight was reached.
Table 1 shows the measurement result of BET adsorption surface area. The EDX line analysis was conducted in the same manner as in Example 1. It was confirmed that the composite inorganic fine powder was formed in a state that the surface of the porous silica particles was entirely coated with a layer of aluminum oxide-aluminum hydroxide.

(Example 3)

The reaction liquids shown below were prepared. Reaction Liquid 1 was stirred after the preparation in a closed vessel for more than 8 hours to allow the magnesium hydroxide to adsorb water from the solvent.

Reaction Liquid 1:

To 100 g of magnesium hydroxide (Kisuma 5, trade name, produced by Kyowa Kagaku Kogyo K.K.) having an average particle diameter of 0.8 $\mu$m, and a BET adsorption surface area 5 $m^2$/g, was added 1,000 g of tetrahydrofuran containing water at a water content of 0.4 wt%. The mixture was stirred in a closed vessel for 8 hours to allow the magnesium hydroxide to adsorb the water.

Reaction Liquid 2:

10 Grams of aluminum triisopropoxide (powder) was dissolved in 10 g of tetrahydrofuran of a water content of 100 ppm or less.

Production of Composite Inorganic Fine Powder:

Reaction Liquid 1 and Reaction Liquid 2 were mixed together, and the mixture was stirred in a closed vessel for 8 hours to cause reaction. Reaction Liquid 2 was used for the mixing within 30 minutes after preparation. After the reaction, the solvent tetrahydrofuran was volatilized by an evaporator, and further the particulate product was vacuum dried at 150°C until a constant weight was reached. Thereby, the composite inorganic fine powder having particle diameter of 2.3 μm was obtained.

Table 1 shows the measurement result of BET adsorption surface area. The EDX line analysis was conducted in the same manner as in Example 1. It was confirmed that the composite inorganic fine powder was formed in a state such that a layer of aluminum oxide-aluminum hydroxide was formed over the entire surface of the magnesium hydroxide particles.

(Example 4)

The reaction liquids shown below were prepared. Reaction Liquid 1 was stirred after the preparation in a closed vessel for more than 8 hours to allow the hydrotalcite to adsorb water from the solvent.

Reaction Liquid 1:

To 100 g of synthetic hydrotalcite (DHT-4A, trade name, produced by Kyowa Kagaku Kogyo K.K. , water content: 0.34%), was added 1,000 g of N,N-dimethyl formamide containing water at a water content of 2 wt%. The mixture was stirred in a closed vessel.

Reaction Liquid 2:

10 Grams of aluminum triisopropoxide (powder) was dissolved in 500 g of N,N-dimethylformamide of a water content of not higher than 100 ppm.

Production of Composite Inorganic Fine Powder:

Reaction Liquid 1 and Reaction Liquid 2 were mixed together, and the mixture was stirred in a closed vessel for 8 hours to cause reaction. Reaction Liquid 2 was used for the mixing within 30 minutes after preparation. After the reaction, the solvent was volatilized by an evaporator, and further the particulate product was vacuum-dried at 200°C until a constant weight was reached.

Table 1 shows the measurement result of the BET adsorption surface area. The EDX line analysis was conducted in the same manner as in Example 1. It was confirmed that the composite inorganic fine powder was formed in a state such that a layer of aluminum oxide-aluminum hydroxide was formed over the entire surface of the hydrotalcite particles.

Table 1

| Adsorption Area by BET Adsorption ($m^2$/g) | |
|---|---|
| Example 1 | 403.6 |
| Comparative Example 1 | 302.9 |
| Comparative Example 2 | 266.6 |
| Comparative Example 3 | 279.3 |
| Example 2 | 380.2 |
| Example 3 | 87.0 |

Table 1 (continued)

| Adsorption Area by BET Adsorption $(m^2/g)$ | |
| --- | --- |
| Example 4 | 79.0 |

Examples of Synthetic Paper Sheet Production:

(Example 5)

(1) Composition (A) was prepared by mixing 81 wt% of polypropylene (mp: 164-167°C) having an MFR of 1.0 g/10min, 3 wt% of high-density polyethylene, and 16 wt% of calcium carbonate having an average diameter of 1.5 μm. This Composition (A) was blended in an extruder set at 270°C, then extruded in a sheet form, and cooled by a cooling device to produce an unstretched sheet. This sheet was heated again to 140°C, and was stretched five-fold in a vertical direction.
(2) composition (B) was prepared by mixing 80 wt% of polypropylene (mp: 164-167°C) having an MFR of 4.0 g/10min, and 20 wt% of the composite inorganic fine powder having a core-shell structure obtained in Example 1. This Composition (B) was melt-blended by another extruder at 270°C, then extruded through a die in a sheet form, and laminated onto both faces of the above five-fold stretched film of (1) to produce a lamination film of a three-layer structure. This three-layered lamination film was cooled once to 60°C, again heated to about 160°C, stretched 7.5-fold in a lateral direction with a tenter, annealed at 165°C, cooled to 60°C, treated by corona discharge, and trimmed to obtain a synthetic paper sheet. This synthetic paper sheet had a three-layer structure (uniaxially stretched/biaxially stretched/uniaxially stretched), having a thickness of 110 μm (B/A/B = 25 μm/60 μm/25 μm), a brightness of 95%, and an opacity of 95%. The void ratios of the respective layers were (B/A/B = 25%/33.7%/25%). The Bekk smoothness of the surface layer (B) of this synthetic paper sheet was 180 seconds (JIS P-8119).

(Comparative Example 4)

(1) Composition (A) was prepared by mixing 81 wt% of polypropylene (mp; 164-167°C) having an MFR of 1.0 g/10min, 3 wt% of high-density polyethylene, and 16 wt% of calcium carbonate having an average diameter of 1.5 μm. This Composition (A) was blended in an extruder set at 270°C, then extruded in a sheet form, and cooled by a cooling device to produce an unstretched sheet. This sheet was heated again to 140°C, and stretched five-fold in a vertical direction.
(2) Composition (B) was prepared by mixing 80 wt% of polypropylene (mp: 164-167°C) having an MFR of 4.0 g/10min, and 20 wt% of the porous silica obtained in Comparative Example 1. This Composition (B) was blended by another extruder, then extruded through a die in a sheet form, and laminated onto both faces of the above five-fold stretched film of (1) to produce a lamination film of a three-layer structure. This three-layered lamination film was cooled once to 60°C, again heated to about 160°C, stretched 7-fold in a lateral direction with a tenter, annealed at 165°C, cooled to 60°C, treated by corona discharge, and trimmed to obtain a synthetic paper sheet. This synthetic paper sheet had a three-layer structure (uniaxially stretched/biaxially stretched/uniaxially stretched), having a thickness of 110 μm (B/A/B = 25 μm/60 μm/25 μm), a brightness of 95%, and an opacity of 94%. The void ratios of the respective layers were (B/A/B = 22%/33.7%/22%). The Bekk smoothness of the surface layer (B) of this synthetic paper sheet was 350 seconds (JIS P-8119).

(Example 6)

(1) composition (A) was prepared by mixing 80 wt% of polypropylene (mp: 164-167°C) having an MFR of 1.0 g/10min, 2 wt% of high-density polyethylene, and 18 wt% of calcium carbonate having an average diameter of 1.5 μm. This Composition (A) was melt-blended in an extruder set at 240°C, then extruded in a sheet form, and cooled by a cooling device to produce an unstretched sheet. This sheet was heated again to 140°C, and stretched 4.5-fold in a vertical direction.
(2) Composition (B) was prepared by mixing 80 wt% of polypropylene (mp; 164-167°C) having an MFR of 4.0 g/10min, and 20 wt% of the composite inorganic fine powder having a core-shell structure obtained in Example 3. This Composition (B) was melt-blended by another extruder at 270°C, then extruded through a die in a sheet form, and laminated onto both faces of the above 4.5-fold stretched film of (1) to produce a lamination film of a three-layer structure. This three-layered lamination film was cooled once to 60°C, again heated to about 160°C, stretched 7-fold in a lateral direction with a tenter, annealed at 165°C, cooled to 60°C, treated by corona discharge, and trimmed to obtain a synthetic paper sheet. This synthetic paper sheet had a three-layer structure (uniaxially stretched/biaxially stretched/uniaxially stretched), having a thickness of 105 μm (B/A/B = 20 μm/65 μm/20 μm), a brightness of 95%, and an opacity of 94%. The void ratios of the respective layers were (B/A/B = 28%/32%/28%). The Bekk smoothness of the surface layer (B) of this synthetic paper sheet was 200 seconds (JIS P-8119).

(Example 7)

(1) Composition (A) was prepared by mixing 80 wt% of polypropylene (mp: 164-167°C) having an MFR of 1.0 g/10min, 2 wt% of high-density polyethylene, and 18 wt% of calcium carbonate having an average diameter of 1.5 μm. This composition (A) was blended in an extruder set at 240°C, then extruded in a sheet form, and cooled by a cooling device to produce an unstretched sheet. This sheet was heated again to 140°C, and stretched 4.5-fold in a vertical direction.

(2) Composition (B) was prepared by mixing 80 wt% of polypropylene (mp: 164-167°C) having an MFR of 4.0 g/10min, and 20 wt% of the composite inorganic fine powder having a core-shell structure obtained in Example 4. This Composition (B) was melt-blended by another extruder at 240°C, then extruded through a die in a sheet form, and laminated onto the both faces of the above 4.5-fold stretched film of (1) to produce a lamination film of a three-layer structure. This three-layered lamination film was cooled once to 60°C, again heated to about 160°C, stretched 7-fold in a lateral direction with a tenter, annealed at 165°C, cooled to 60°C, treated by corona discharge, and trimmed to obtain a synthetic paper sheet. This synthetic paper sheet had a three-layer structure (uniaxially stretched/biaxially stretched/uniaxially stretched), having a thickness of 105 μm (B/A/B = 20 μm/65 μm/20 μm), a brightness of 95%, and an opacity of 92%. The void ratios of the respective layers were (B/A/B = 26%/32%/26%). The Bekk smoothness of the surface layer (B) of this synthetic paper sheet was 230 seconds (JIS P-8119).

Evaluation:

On the surface of the respective synthetic paper sheets prepared in Examples 5-7 and Comparative Example 4, 50%-dot printing was conducted with a red ink (CCST, produced by Toyo Ink Mfg. Co.) by means of a gravure printability tester of a Printing Bureau type manufactured by Kumagaya Riki Kogyo K.K. The printed face was examined for the printed dots with 100-fold enlargement by a microscope. As the results, the dots were nearly complete and the red color was sharp on the synthetic paper sheets of Examples 5-7, whereas on the synthetic paper sheet of Comparative Example 4, the dots were lacking in some areas (about 5%) and color sink was observed in some areas.

(Example 8)

A recording medium was prepared by applying an ink-receiving layer coating material of the composition below on one face of a pulp-made paper sheet of a basis weight of 150 g/m$^2$ in a coating amount of 30 g solid/m$^2$, drying it at 110°C, and treating the coat layer for smoothness by a supercalender.

Coating material composition:

| Composite inorganic fine powder of Example 1 | 100 wt parts |
| Polyvinyl alcohol | 30 wt parts |
| Quaternary ammonium salt of polyethyleneimine | 10 wt parts |
| Sodium polyacrylate | 5 wt parts |

(continued)

| Water | 1600 wt parts |
|---|---|

Evaluation:

Color printing was conducted in yellow, magenta, cyan, and black colors on the ink-receiving layer of the above recording medium by means of a bubble-jet printer BJC-410J (trade name, manufactured by Canon K.K.). The time for drying of the ink was measured.

After confirming the development of the respective colors, an adhesive tape "Cellotape" (trade name, produced by Nichiban K.K.) was stuck strongly onto a printed face of a part of the printed area of the recording medium. Then, the adhesive tape was quickly peeled off along the adhesion face, and the extent of remaining of the ink on the paper sheet was examined visually.

Ink remaining ratio:  100-95% Excellent (◯ )
95-80% Fair (△)
80- 0 Poor (x)

Table 2 shows the results.

(Comparative Example 5)

A recording medium was prepared and evaluated in the same manner as in Example 4 except that the coating material of the composition below was used as the ink-receiving layer coating material.

Coating material composition:

| Composite inorganic fine powder of Comparative Example 2 | 100 wt parts |
|---|---|
| Polyvinyl alcohol | 30 wt parts |
| Quaternary ammonium salt of polyethyleneimine | 10 wt parts |
| Sodium polyacrylate | 5 wt parts |
| Water | 1600 wt parts |

Table 2 shows the results.

(Comparative Example 6)

A recording medium was prepared, and evaluated in the same manner as in Example 4 except that the coating material of the composition below was used as the ink-receiving layer coating material.

Coating material composition:

| Composite inorganic fine powder of Comparative Example 3 | 100 wt parts |
|---|---|
| Polyvinyl alcohol | 30 wt parts |
| Quaternary ammonium salt of polyethyleneimine | 10 wt parts |

(continued)

| | |
|---|---|
| Sodium polyacrylate | 5 wt parts |
| Water | 1600 wt parts |

Table 2 shows the results.

(Example 9)

A recording medium was prepared and evaluated in the same manner as in Example 8 except that the coating material of the composition below was used as the ink-receiving layer coating material.

Coating material composition:

| | |
|---|---|
| Composite inorganic fine powder of Example 2 | 100 wt parts |
| Polyvinyl alcohol | 30 wt parts |
| Quaternary ammonium salt of polyethyleneimine | 10 wt parts |
| Sodium polyacrylate | 5 wt parts |
| Water | 1600 wt parts |

(Example 10)

A recording medium was prepared and evaluated in the same manner as in Example 8 except that the coating material of the composition below was used as the ink-receiving layer coating material.

Coating material composition:

| | |
|---|---|
| Composite inorganic fine powder of Example 3 | 130 wt parts |
| Polyvinylpyrrolidone | 40 wt parts |
| Quaternary ammonium salt of polyethyleneimine | 10 wt parts |
| Sodium polyacrylate | 5 wt parts |
| Water | 1540 wt parts |

Table 2 shows the results.

Table 2

| | Time for drying | Ink remaining ratio |
|---|---|---|
| Example 8 | 38 seconds | ○ |
| Comparative Example 5 | 75 seconds | △ |

Table 2 (continued)

|  | Time for drying | Ink remaining ratio |
|---|---|---|
| Comparative Example 6 | 60 seconds | ◯ |
| Example 9 | 45 seconds | ◯ |
| Example 10 | 51 seconds | ◯ |

(Example 11)

Onto the recording medium obtained in Example 6, hot-melt type ink-jet printing was conducted by ejecting hot-melt type inks of a black ink (016-1123-00), a cyan ink (016-1124-00), a magenta ink (016-1125-00), and a yellow ink (016-1126-00) produced by Sony Techtronix Co. at the ink melting temperature (78-85°C) by means of a color printer "Phaser 300IS" (trade name, manufactured by Sony Techtronix Co.).

Evaluation:

(1) Uniform solid printability:

Solid color portions developed with the color inks of yellow, magenta, cyan, and black were examined for the uniformity with an optical microscope at 100-fold magnification. The image was sharp without blank spots in the solid portions.

(Example 12)

Ink-jet printing was conducted in the same manner as in Example 11 except that the recording medium was replaced by the one obtained in Example 7.

Evaluation:

(1) Uniform solid printability:

Solid color portions developed with the color inks of yellow, magenta, cyan, and black were examined for the uniformity with an optical microscope at 100-fold magnification. The image was sharp without blank spots in the solid portions.

INDUSTRIAL APPLICATION FIELD

The composite inorganic fine powder will fix the ink satisfactorily, and enables production of a recording mediums and synthetic paper sheets capable of giving sharp images and printing.

**Claims**

1.  A composite inorganic fine powder constituted of particles and shells covering the particle, the particle as a core having hydroxyl groups, and the shell being formed from an aluminum compound selected from aluminum oxide and aluminum hydroxide.

2.  The composite inorganic fine powder according to claim 1, wherein the particle having hydroxyl groups is selected from the group consisting of magnesium hydroxide, aluminum hydroxide, pulverized dorsonite $[NaAl(OH)_2CO_3]$, montmorillonite $[Al_4(Mg)[Si_8(Al)O_{20}](OH)_4 \cdot xH_2O]$, basic magnesium aluminum hydroxy carbonate hydrate $[Mg_6Al_2(OH)_{16}CO_3 \cdot 4H_2O]$, natural or synthetic hydrotalcite $[Mg_{4.5}Al_2(OH)_{13}CO_3 \cdot 3.5H_2O]$, coprecipitated aluminum-magnesium hydroxide, coprecipitated aluminum hydroxide-sodium carbonate, porous silica, fine particles of cross-linked copolymers of methyl methacrylate and 2-hydroxyethyl methacrylate, and fine particles of cross-linked copolymers of styrene, ethylene glycol diacrylate, and 2-hydroxyethyl methacrylate.

3.  The composite inorganic fine powder according to claim 1, wherein the particle having hydroxyl groups is selected form the group consisting of magnesium hydroxide, porous silica, and hydrotalcite.

4. The composite inorganic fine powder according to claim 1, wherein the composite inorganic fine powder has an adsorption surface area larger than that of the particles having hydroxyl groups as the nucleus before the coating.

5. The composite inorganic fine powder according to claim 1, wherein the surface area of the composite inorganic fine powder by a BET method ranges from 1 to 1,000 $m^2$/g.

6. The composite inorganic fine powder according to claim 1, wherein the particle diameter of the composite inorganic fine powder ranges from 0.5 to 7 $\mu$m.

7. A process for producing a composite inorganic fine powder constituted of particles as cores having hydroxyl groups and shells covering the particle and being formed from an aluminum compound selected from aluminum oxide and aluminum hydroxide, the process comprising bringing hydroxyl group-containing particles having water adsorbed thereto into contact with an aluminum alkoxide represented by General Formula (1) dissolved in a hydrophilic solvent to form a film of the aluminum hydroxide or aluminum oxide on the surface of the hydroxyl group-containing particles, and then volatilizing the hydrophilic solvent:

$$R^1{}_{(3-n)}Al(OR^2)_n \qquad\qquad (1)$$

wherein $R^1$ and $R^2$ are independently an alkyl group of 1 to 6 carbons, and n is 2 or 3.

8. The process according to claim 7, wherein the particle having hydroxyl groups is selected from the group consisting of magnesium hydroxide, aluminum hydroxide, pulverized dorsonite [$NaAl(OH)_2CO_3$], montmorillonite [$Al_4(Mg)[Si_8(Al)O_{20}](OH)_4 \cdot xH_2O$], basic magnesium aluminum hydroxy carbonate hydrate [$Mg_6Al_2(OH)_{16}CO_3 \cdot 4H_2O$], natural or synthetic hydrotalcite [$Mg_{4.5}Al_2(OH)_{13}CO_3 \cdot 3.5H_2O$], coprecipitated aluminum-magnesium hydroxide, coprecipitated aluminum hydroxide-sodium carbonate, porous silica, fine particles of cross-linked copolymers of methyl methacrylate and 2-hydroxyethyl methacrylate, and fine particles of cross-linked copolymers of styrene, ethylene glycol diacrylate, and 2-hydroxyethyl methacrylate.

9. The process according to claim 7, wherein the particle having hydroxyl groups is selected form the group consisting of magnesium hydroxide, porous silica, and hydrotalcite.

10. The process according to claim 7, wherein the particles having hydroxyl groups contain adsorbed water in an amount ranging from 0.01 to 10 parts by weight per 100 parts by weight of the particles.

11. The process according to claim 7, wherein the aluminum alkoxide represented by General Formula (1) is selected from the group of aluminum triisopropoxide, aluminum tributoxide, aluminum triethoxide, aluminum tri-sec-butoxide, mono-sec-butoxyaluminum diisopropoxide, di-sec-butoxyaluminum monoisopropoxide, mono-sec-butoxyaluminum di-n-butoxide, di-sec-butoxyaluminum mono-n-butoxide, aluminum tri-n-propoxide, isopropoxyaluminum di-n-propoxide, diisopropoxyaluminum n-propoxide, diisopropoxyaluminum monoethoxide, monoisopropoxyaluminum diethoxide, di-sec-butoxyaluminum monomethoxide, diisopropoxyaluminum monomethoxide, diisopropoxyaluminum monohexyloxide, mono-n-propoxyaluminum diethoxide, di-n-propoxyaluminum monoethoxide, mono-sec-butoxialuminum diethoxide, di-sec-butoxialuminum monoethoxide, aluminum tripentyl oxide, aluminum ethyl diisopropoxide, aluminum ethyl diethoxide, aluminum ethyl dibutoxide, aluminum isopropyl diethoxide, and aluminum methyl diethoxide.

12. The process according to claim 7, wherein the hydrophilic solvent is selected from aliphatic alcohols, ketones, esters, esters, ethers, and formamides of 1 to 8 carbons.

13. A recording medium comprising a support (I), and a resin coat layer (II) containing a composite inorganic fine powder at a content ranging from 40% to 92% by weight and a resin binder at a content ranging from 60% to 8% by weight, the composite inorganic fine powder being constituted of particles as cores having hydroxyl groups and shells covering the particle and being formed from an aluminum compound selected from aluminum oxide and aluminum hydroxide.

14. The recording paper sheet according to claim 13, wherein the particle having hydroxyl groups is selected from the group consisting of magnesium hydroxide, aluminum hydroxide, pulverized dorsonite [$NaAl(OH)_2CO_3$], montmorillonite [$Al_4(Mg)[Si_8(Al)O_{20}](OH)_4 \cdot xH_2O$], basic magnesium aluminum hydroxy carbonate hydrate [$Mg_6Al_2(OH)_{16}CO_3 \cdot 4H_2O$], natural or synthetic hydrotalcite [$Mg_{4.5}Al_2(OH)_{13}CO_3 \cdot 3.5H_2O$], coprecipitated alumi-

num-magnesium hydroxide, coprecipitated aluminum hydroxide-sodium carbonate, porous silica, fine particles of cross-linked copolymers of methyl methacrylate and 2-hydroxyethyl methacrylate, and fine particles of cross-linked copolymers of styrene, ethylene glycol diacrylate, and 2-hydroxyethyl methacrylate.

15. The recording paper sheet according to claim 13, wherein the particle having hydroxyl groups is selected form the group consisting of magnesium hydroxide, porous silica, and hydrotalcite.

16. The recording paper sheet according to claim 13, wherein the recording medium comprises a composite inorganic fine powder constituted of particles as cores having hydroxyl groups and shells covering the particle and being formed from an aluminum compound selected from aluminum oxide and aluminum hydroxide, the composite inorganic fine powder being produced by a process comprising bringing hydroxyl group-containing particles having water adsorbed thereto into contact with an aluminum alkoxide represented by General Formula (1) dissolved in a hydrophilic solvent to form a film of the aluminum hydroxide or aluminum oxide on the surface of the hydroxyl group-containing particles, and then volatilizing the hydrophilic solvent:

$$R^1_{(3-n)}Al(OR^2)_n \qquad\qquad (1)$$

wherein $R^1$ and $R^2$ are independently an alkyl group of 1 to 6 carbons, and n is 2 or 3.

17. The recording paper sheet according to claim 13, wherein the particles having hydroxyl groups contain adsorbed water in an amount ranging from 0.01 to 10 parts by weight per 100 parts by weight of the particles.

18. The recording paper sheet according to claim 13, wherein the support (I) is selected from pulp-made sheets, microporous films constituted of a thermoplastic resin containing the composite inorganic fine powder, and biaxially stretched polyethylene terephthalate films.

19. The recording paper sheet according to claim 13, wherein the recording medium is a recording paper sheet for aqueous ink-jet printing, a recording paper sheet for oil -based ink-jet printing, or a recording paper sheet for hot-melt type ink-jet printing.

20. A synthetic paper sheet produced by stretching a resin film containing a composite inorganic fine powder at a content ranging from 8% to 65% by weight and a thermoplastic resin at a content ranging from 92% to 35% by weight at a stretching temperature lower than the melting point of the thermoplastic resin, the composite inorganic fine powder being constituted of particles as cores having hydroxyl groups and shells covering the particle and being formed from an aluminum compound selected from aluminum oxide and aluminum hydroxide.

21. The synthetic paper sheet according to claim 20, wherein the particle having hydroxyl groups is selected from the group consisting of magnesium hydroxide, aluminum hydroxide, pulverized dorsonite [$NaAl(OH)_2CO_3$], montmorillonite [$Al_4(Mg)[Si_8(Al)O_{20}](OH)_4 \cdot xH_2O$], basic magnesium aluminum hydroxy carbonate hydrate [$Mg_6Al_2(OH)_{16}CO_3 \cdot 4H_2O$], natural or synthetic hydrotalcite [$Mg_{4.5}Al_2(OH)_{13}CO_3 \cdot 3.5H_2O$], coprecipitated aluminum-magnesium hydroxide, coprecipitated aluminum hydroxide-sodium carbonate, porous silica, fine particles of cross-linked copolymers of methyl methacrylate and 2-hydroxyethyl methacrylate, and fine particles of cross-linked copolymers of styrene, ethylene glycol diacrylate, and 2-hydroxyethyl methacrylate.

22. The synthetic paper sheet according to claim 20, wherein the particle having hydroxyl groups is selected form the group consisting of magnesium hydroxide, porous silica, and hydrotalcite.

23. The synthetic paper sheet according to claim 20, wherein the thermoplastic resin is at least the one selected from high-density polyethylenes, polypropylenes, ethylene-propylene copolymers, poly(4-methylpentene-1) resins, polystyrenes, polyamides, and polyethylene terephthalates.

24. The synthetic paper sheet according to claim 20, wherein the synthetic paper sheet has fine voids at a void ratio defined by Equation 1 below ranging from 5% to 60%:

$$\text{Void ratio (\%)} = [(\rho 0 - \rho)/\rho 0] \times 100 \qquad\qquad \text{Equation 1}$$

where $\rho 0$ is the density of the resin film before the stretching, and $\rho$ is the density of the resin film after the stretching.

FIG. 1

1a

2a

1 (CORE)

2 (SHELL)

FIG. 2

(a)

(b)

— Al K $\alpha$
— Si K $\alpha$

FIG. 3

(a)

(b)

— Si K $\alpha$
— Al K $\alpha$

# INTERNATIONAL SEARCH REPORT

| International application No. |
|---|
| PCT/JP97/04235 |

**A. CLASSIFICATION OF SUBJECT MATTER**
Int.Cl⁶ C01B33/12, C01F7/02, C09D11/02, B41M5/00, 5/40, D21H19/38, 17/67

According to International Patent Classification (IPC) or to both national classification and IPC

**B. FIELDS SEARCHED**

Minimum documentation searched (classification system followed by classification symbols)
Int.Cl⁶ C01B33/00-33/193, C01F7/02-7/47, C09D11/00-11/20, B41M5/00, 5/40, D21H19/38-19/40, 17/67-17/69

Documentation searched other than minimum documentation to the extent that such documents are included in the fields searched
Jitsuyo Shinan Koho 1926-1996 Toroku Jitsuyo Shinan Koho 1994-1998
Kokai Jitsuyo Shinan Koho 1971-1997

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | JP, 62-286787, A (Canon Inc.), December 12, 1987 (12. 12. 87), Claims ; page 2, lower column to pages 3, 5 ; Examples (Family: none) | 1-3, 5-9, 11-16, 19 |
| X | JP, 3-67685, A (Kanzaki Paper Mfg. Co., Ltd.), March 22, 1991 (22. 03. 91), Claims ; page 2, lower left column to page 3 (Family: none) | 1-3, 5, 6, 13-16, 19 |
| X | JP, 3-218887, A (Canon Inc.), September 26, 1991 (26. 09. 91), Claims ; page 3, Examples (Family: none) | 1-3, 5-9, 11-16, 19 |
| A | JP, 62-278082, A (Oji Paper Co., Ltd.), December 2, 1987 (02. 12. 87), Page 1 ; page 2, lower right column to page 3, upper left column (Family: none) | 13-17, 19 |

☒ Further documents are listed in the continuation of Box C.   ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | |
| "O" document referring to an oral disclosure, use, exhibition or other means | "Y" document of particular relevance; the claimed invention cannot be considered to involve an inventive step when the document is combined with one or more other such documents, such combination being obvious to a person skilled in the art |
| "P" document published prior to the international filing date but later than the priority date claimed | "&" document member of the same patent family |

| Date of the actual completion of the international search | Date of mailing of the international search report |
|---|---|
| February 16, 1998 (16. 02. 98) | March 3, 1998 (03. 03. 98) |

| Name and mailing address of the ISA/ | Authorized officer |
|---|---|
| Japanese Patent Office | |
| Facsimile No. | Telephone No. |

Form PCT/ISA/210 (second sheet) (July 1992)

## INTERNATIONAL SEARCH REPORT

| International application No. |
| --- |
| PCT/JP97/04235 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP, 3-82589, A (Oji Paper Co., Ltd.), April 8, 1991 (08. 04. 91), Claims ; page 2 (Family: none) | 18, 19 |
| A | JP, 1-136783, A (Toray Industries, Inc.), May 30, 1989 (30. 05. 89), Pages 1, 2 (Family: none) | 20-23 |
| A | JP, 7-76186, A (Oji Yuka Goseishi Co., Ltd.), March 20, 1995 (20. 03. 95), Pages 1, 3 & EP, 630759, A1 | 24 |

Form PCT/ISA/210 (continuation of second sheet) (July 1992)